(19) Europäisches Patentamt

European Patent Office

Office européen des brevets

(11) **EP 3 435 183 A1**

(12) **EUROPEAN PATENT APPLICATION**

(43) Date of publication:
**30.01.2019 Bulletin 2019/05**

(51) Int Cl.:
***G05B 19/423*** (2006.01)

(21) Application number: **17183177.9**

(22) Date of filing: **26.07.2017**

<table>
<tr>
<td>

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**
Designated Extension States:
**BA ME**
Designated Validation States:
**MA MD**

(71) Applicant: **ABB Schweiz AG**
**5400 Baden (CH)**

</td>
<td>

(72) Inventors:
• **Groth, Tomas**
  **72480 Västeras (SE)**
• **Wahrburg, Arne**
  **64293 Darmstadt (DE)**

(74) Representative: **Marks, Frank**
**ABB AG**
**GF-IP**
**Wallstadter Strasse 59**
**68526 Ladenburg (DE)**

</td>
</tr>
</table>

(54) **METHOD FOR CONTROLLING A ROBOT ARM AND ROBOT SYSTEM WITH A ROBOT ARM**

(57)     The present invention is about a method of controlling a robot arm (1), the robot arm comprising at least one member (4, 10), a joint (5, 9) by which the member is connected to a support (3, 6) and which defines an axis (7, 8, 11), by which the member (4, 10) is rotatable with respect to the support(3, 6), and a motor for driving rotation of the member (4, 10) by said axis(7, 8, 11), the method comprising the steps of

a) establishing (S4) a functional relationship between a load torque ($\tau_{load}$) to which the joint (5, 9) is subject due to weight and posture of the member (4, 10) and an internal torque ($\tau_d$) resisting rotation of the joint (5, 9),

b) determining (S2) a current load torque ($\tau_{load}$) associated to a current posture of the member (4, 10),

c) determining, based on said functional relationship, a current internal torque; and

d) controlling (S6) the motor to apply to the member (4, 10) a torque which compensates the sum of said load and internal torques ($\tau_{load}$, $\tau_d$).

# Fig. 2

$$S2 \quad \tau_{load} = \sum_i m_i \mathbf{g} \times \left( \mathbf{r}_i - \mathbf{r}_j \right)$$

$$S4 \quad \tau_{fric} = c_c + c_v \dot{q} + (c_{L,a} \, \square \, c_{L,b} \dot{q}) \pi_{load}$$

$$S5 \quad \# \tau_{cable}$$

EP 3 435 183 A1

**Description**

The present invention relates to a method for controlling robot arm, in particular for controlling the robot arm in a so-called lead-through mode, and to a robot system with a robot arm.

The lead-through mode derives its name from the fact that in this mode the movement of the robot arm is not actively controlled by a dedicated controller circuit according to a pre-defined program, but the robot arm is passively led through a sequence of movements by operating personnel, and the controller records angles of rotation of the various joints of the robot arm go through in this process, so that later, when the controller has reverted from lead-through mode to active control mode, it is capable of reproducing the movements it has been shown in lead-through mode.

WO 2010/088959 A1 discloses a robot arm and a method for programming it in lead-through mode. A controller associated to the robot arm comprises position control loops which detect a deviation between an actual position and a desired position of a displaceable member of the robot arm and control an actuator force which urges the displaceable member towards said desired position. While in active control mode gain of these position control loops is high, so that the robot arm will oppose strongly any outside force that tends to drive it away from the desired position, this gain is reduced in lead-through mode, so that the resistance of the robot arm can be overcome by service personnel, and the robot arm can be guided along a path it is to learn.

In order to overcome static friction while guiding the robot arm, WO 2010/088959 A1 proposes a device which is mounted on the robot and generates information on in which direction a user intends to move the robot, whereupon the controller increases torque control signals in the intended direction until friction has been overcome and the robot arm begins to move. If the increase is slow, a user pressing the device will feel its resistance and will therefore press rather hard in order to set the robot arm in motion, and once the robot arm begins to move, it is likely to move farther than desired. On the other hand, if the increase is fast, the robot arm is likely to "run away" from a user pressing the device, so that continuous pressure on the device cannot be maintained, and movement of the robot arm becomes jerky.

The object of the present invention is to provide a robot arm and a method for operating it allow for convenient, precise guiding of the robot arm by an operator.

According to a first aspect of the invention, this object is achieved by a method of controlling a robot arm, the robot arm comprising at least one member, a joint by which the member is connected to a support and which defines an axis by which the member is rotatable with respect to the support, and a motor for driving rotation of the member by said axis, the method comprising the steps of

> a) establishing a functional relationship between a load torque to which the joint is subject due to weight and posture of the member and an internal torque resisting rotation of the joint,
> b) determining a current load torque associated to a current posture of the member,
> c) determining, based on said functional relationship, a current internal torque; and
> d) controlling the motor to apply to the member a torque which compensates the sum of said load and

internal torques.

In principle, according to the present invention, the above-described closed-loop control of the robot arm movement is replaced by open-loop control. However, open-loop control will produce satisfying results only if the torque which the motor must generate in order to set the member in motion is predicted precisely. Calculating a load torque is conventionally done in gravity-compensated robot systems; since in such a system the controller must know the angles of all joints, and the weight and size of links extending between the joints are constant, it is possible to calculate for any joint the total weight of the member supported by it and the length of lever arm associated to it, and thus to calculate the load torque which a motor associated to the joint must generate in order to hold the member stationary, and to relieve a user from the weight of the member when the user is guiding the member in lead-through mode.

What is not compensated in a gravity-compensated system, however, is internal torque, mainly due to friction, by which the joint will oppose displacement by the user. Such internal torque can be considerable and can make lead-through programming of big robots an arduous task. Moreover, due to the difference between static and dynamic friction coefficients, it is difficult to lead the robot precisely.

The present invention enables a precise prediction of such internal torque by taking into account that the internal torque is dependent on the load torque and will therefore vary whenever the length of lever arm of the member changes, be it due to rotation of the joint or to some internal change of weight distribution in the member. Therefore, the member can be moved with little effort in lead-through mode, regardless of size and weight.

Various effects contribute to the internal torque of the joint, so that the functional relationship is most conveniently described as a sum of various terms, each of which is associated to one of these effects. It is evident from what is described above that an important one of these effects is friction. The instantaneous angle of the joint is relevant for the friction contribution to internal torque since it determines the length of lever arm by which the member acts on the joint. However, for a precise prediction of the friction contribution, not only the instantaneous value of the angle should be taken into account, but also its rate of change.

Specifically, in order to take account of static and dynamic friction, the friction contribution should be estimated assuming it to have a maximum at zero angular velocity.

Further, in order to take account of lubrication effects, the friction contribution should be estimated assuming it to have minimum at nonzero angular velocity and to increase with angular velocity in an angular velocity range beyond said minimum.

Another contribution to the internal torque can be due to elasticity, particularly to the elasticity of cables which extend through the joint and are subject to bending or torsion when the joint is rotated.

It is a characteristic of the elasticity contribution that the joint has an equilibrium angle at which the elasticity contribution is zero, and that if the joint is displaced from said equilibrium angle the elasticity contribution urges the joint towards said equilibrium angle.

Both the elasticity contribution and the effect of lubrication are likely to depend on temperature. Therefore the internal torque could be determined taking into account a temperature of the joint.

The current load torque should be calculated based on a current posture of the member.

The member may comprise plural components which can assume different configurations. Since the length of lever arm of the member can vary depending on these configurations, the current load torque should be determined taking into account the variable configuration of the components.

The step of establishing the functional relationship may be carried out by the manufacturer of the robot arm, e.g. based on a prototype and assuming that the functional relationship of the prototype will hold for other specimens of the robot arm, too. Preferably, what is provided by the manufacturer is merely a law, stored in a controller of the robot arm, for calculating the internal torque using a set of variables which can be determined empirically for each specimen of the robot arm.

These variables can be determined by recording a plurality of data triplets indicating a rotation angle, a rotation speed and a motor torque needed to rotate the joint at said angle and rotation speed.

The step of establishing the functional relationship between load torque and internal torque can be carried out repeatedly. By thus updating the functional relationship from time to time, aging effects can be compensated; further, by comparing first and second functional relationships established at different times, possible defects of the robot arm can be detected or even anticipated.

According to a second aspect of the invention, the above object is achieved by a robot system comprising a robot arm and a controller, the robot arm comprising at least one member, a joint by which the member is connected to a support and which defines an axis by which the member is rotatable with respect to the support, and a motor for driving rotation of the member by said axis, wherein the controller is adapted to control the motor using the method described above.

If the member comprises several components such as a second-order base, a second-order member, a second-order joint and a second-order motor, the second-order base extending between said joint and said second-order joint, the controller can use the above-described method for controlling also the second-order motor.

The invention can further be embodied in a computer program product comprising program code means which enable a computer to perform the method described above.

Further features and advantages of the invention will become apparent from the following description of embodiments thereof, referring to the appended drawings.

Fig. 1    schematically illustrates a robot system according to the invention.

Fig. 3    is a flowchart of a first part of an operating method carried out by a controller of the robot system of Fig. 1.

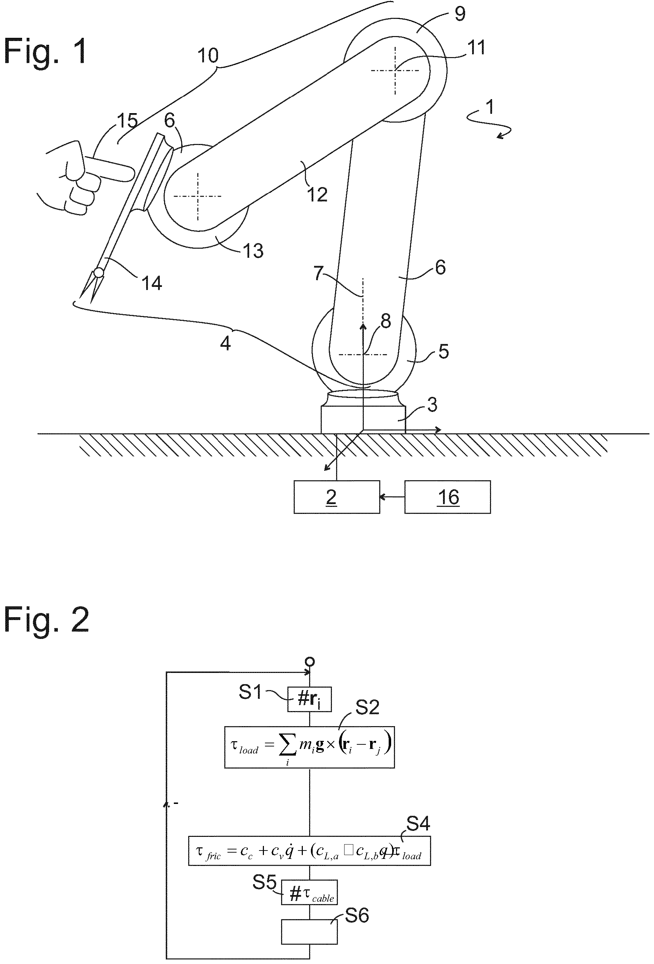

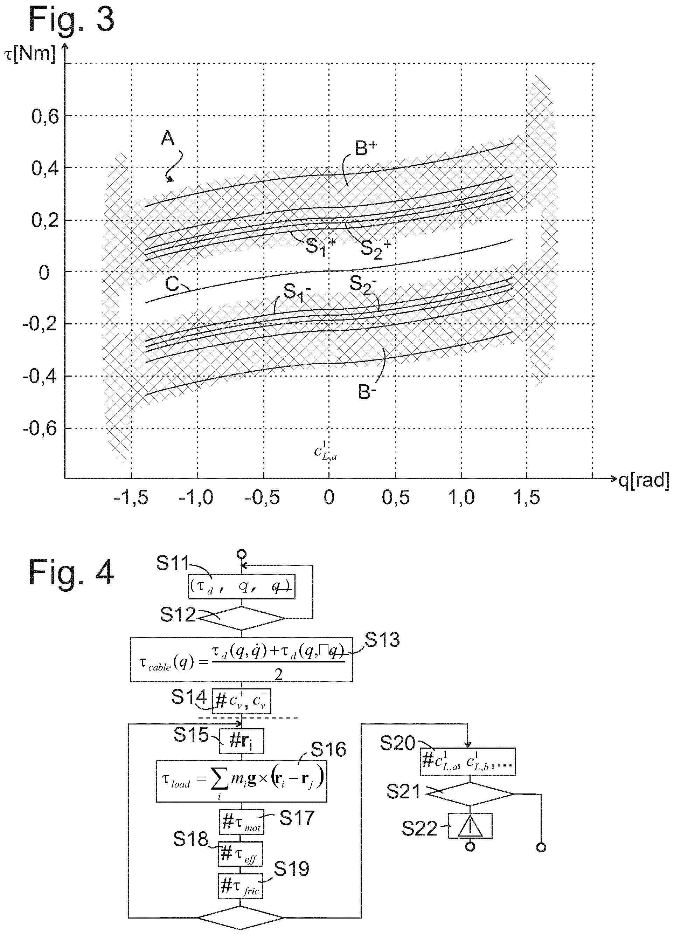

Fig. 3    is a graph illustrating results of torque measurements in a joint of the robot system of Fig. 1; and

Fig. 4    is a flowchart of a second part of an operating method.

Fig. 1 illustrates a robot system comprising a robot arm 1 and its associated controller 2. The robot arm 1 comprises a support 3, a member 4 and a joint 5 which connects the support 3 to a first link 6 of member 4 and enables rotation of the member 4 with respect to the support 3 by one or two axes, e.g. a zenith axis 7 and an azimuth axis 8 which is perpendicular to and rotatable about zenith axis 7. As usual in the art, motors for driving rotation of the member 4 about axes 7, 8 are hidden inside the link 6, the joint 5 or the support 3. The joint 5 further comprises rotary encoders associated to each axis 7, 8, which provide the controller 2 with data on azimuthal and zenithal orientation of link 6.

The member 4 can be regarded as comprising a second order support, namely link 6, a second order joint 9 and a second order member 10, which is pivotably connected to link 6 by joint 9. Here, too, a rotary encoder provides the controller 2 with data on the orientation of member 10 with respect to link 6.

Member 10 can be regarded as comprising a third order support, namely link 12 connected to joint 9, a third order joint 13 and a third order member, namely end effector 14. The end effector 14 may be equipped with a sensor for measuring the weight if a payload which may be attached to the end effector 14. If the payload is known, no sensor for measuring the weight is required. Obviously, if the robot arm had still more joints, members of a still higher order could be defined.

Since all joints 5, 9, 13 have a rotary encoder associated to each of their axes of rotation, the controller calculates, in step S1 of Fig. 2, the coordinates $\mathbf{r}_9$, $\mathbf{r}_{13}$ of all other joints 9, 13 and $\mathbf{r}_6$, $\mathbf{r}_{12}$, $\mathbf{r}_{14}$ of the centres of gravity of all links 6, 12 and of the end effector 14, taking into account, if present, any payload that might be attached to the end effector. These vectors are best defined in a three-dimensional coordinate system xyz in which the support 3 and joint 5 are stationary. Subsequently, we will assume that the joint 5 is at the origin of this coordinate system, i.e. $\mathbf{r}_5$=0.

The load torque $\tau_{load}$ exerted on any joint 5, 9, 13 is the sum of the torques of the components appended to the joint. E.g. for joint 9, it is

$$\tau_{load} = \sum_{i=12,14} m_i \mathbf{g} \times \left( \mathbf{r}_i - \mathbf{r}_9 \right), \qquad (1)$$

wherein $m_i$ is the mass of component i, and $\mathbf{g}$ is the gravity acceleration vector. The load torques are calculated for all joints 5, 9, 13 in step S2.

Internal torque $\tau_d$ of the joints 5, 9, 13 that might oppose any movement the user is trying to lead is substantially due to two causes, namely friction and the bending resistance of a cable extending through the joints 5, 9, 13:

$$\tau_d = \tau_{fric} + \tau_{cable} \, .$$

The bending resistance of the cable can be assumed to be purely elastic, since losses by inelastic bending of the cable cannot be distinguished from friction effects.

In step S4, the controller 2 calculates the effect of friction by the following law:

$$\tau_{fric} = \begin{cases} c_c^+ + c_v^+ \dot{q} + (c_{L,a}^1 + c_{L,b}^1 \dot{q})\tau_{load} & \dot{q} > 0, \tau_{load} > 0 \\ c_c^+ + c_v^+ \dot{q} + (c_{L,a}^2 + c_{L,b}^2 \dot{q})\tau_{load} & \dot{q} > 0, \tau_{load} < 0 \\ -c_c^- + c_v^- \dot{q} + (c_{L,a}^3 + c_{L,b}^3 \dot{q})\tau_{load} & \dot{q} < 0, \tau_{load} > 0 \\ -c_c^- + c_v^- \dot{q} + (c_{L,a}^4 + c_{L,b}^4 \dot{q})\tau_{load} & \dot{q} < 0, \tau_{load} < 0 \end{cases} \qquad , \ (2)$$

wherein $\dot{q}$ is the joint speed, i.e. the angular velocity by which e.g. in joint 9 link 12 rotates with respect to link 6, and the c parameters have previously been determined empirically.

Expression (2) allows for asymmetry in both Coulomb and viscous friction, by allowing Coulomb and viscous friction parameters $c_c^+$, $c_c^-$ and $c_v^+$, $c_v^-$ to depend on the direction of rotation. It takes account of load dependency of friction by introducing load-proportional terms $c_{L,a}^i + c_{L,b}^i \dot{q}$, i=1,...,4. The embodiment considered here uses four such terms, depending on the sign of $\dot{q}$, i.e. on the direction of rotation of the joint, and on the sign of $\tau_{load}$, i.e. on whether the load torque drives or opposes the rotation. Depending on the structure of the joint, it may be sufficient to use a simplified model having just one load-proportional term regardless of the directions of torque and rotation, or having two terms, differentiating only according to the direction of rotation or only according to the direction of load torque.

On the other hand, in a further sophisticated model, static friction or stiction effects may be taken account of by introducing a further addend in (2) :

$$\tau_{fric} = \begin{cases} c_c^+ + c_s^+ e^{-(\dot{q}/v_s)} + c_v^+ \dot{q} + (c_{L,a}^1 + c_{L,b}^1 \dot{q})\tau_{load} & \dot{q} > 0, \tau_{load} > 0 \\ c_c^+ + c_s^+ e^{-(\dot{q}/v_s)} + c_v^+ \dot{q} + (c_{L,a}^2 + c_{L,b}^2 \dot{q})\tau_{load} & \dot{q} > 0, \tau_{load} < 0 \\ -c_c^- - c_s^- e^{-(\dot{q}/v_s)} + c_v^- \dot{q} + (c_{L,a}^3 + c_{L,b}^3 \dot{q})\tau_{load} & \dot{q} < 0, \tau_{load} > 0 \\ -c_c^- - c_s^- e^{-(\dot{q}/v_s)} + c_v^- \dot{q} + (c_{L,a}^4 + c_{L,b}^4 \dot{q})\tau_{load} & \dot{q} < 0, \tau_{load} < 0 \end{cases} \qquad (3)$$

wherein $v_s$ is the Stribeck velocity and $c_s$ is the static friction coefficient (which may also depend on the direction of rotation).

Among the coefficients of above eq. (2) and (3), in particular those that are multiplied with $\dot{q}$ are related to lubrication and therefore tend to depend noticeably on temperature. This can be taken account of by providing at least one of the joints 5, 9, 13 of robot arm 1 with a temperature sensor or by inferring the joint temperature from the time it has been in operation, and by enabling lead-through operation only if the temperature is above a given threshold or by outputting a notice to the user that since the temperature of the joint is too low, friction compensation in lead-through mode may be deficient. Alternatively, if the relation between temperature and viscosity of the lubricant is known, temperature-dependent coefficients $c_v^+$ , $c_v^-$ , $c_{L,b}^1$ , $c_{L,b}^1$ , ... can be determined and employed in eq. (2) or (3).

The bending torque $\tau_{cable}$ is obtained from a lookup table 16 in step S5.

In step S6, each motor is driven to exert the torque

$$\tau_d = \tau_{fric} + \tau_{cable} \cdot$$

This means, the motors are fed with the summation of gravity-compensating torques, an estimation of friction torques and an estimation of cable-bending torques.

So any resistance the joints 5, 9, 13 might oppose to a change in the motion state of the robot arm 1 is overcome by the motors, so that the robot arm 1 can be guided in lead-through mode precisely and without effort.

In order to identify the coefficients of eq. (2) for a given joint of the robot arm, calibration measurements are carried out (Step S11 of Fig. 4) in which the joint is rotated at a constant speed and passes through a position in which the lever arm length of the member attached to it is zero. In this position, the load torque $\tau_{load}$ is zero, and the drive torque $\tau_{mot}$ of the motor driving the joint equals $\tau_d$. By thus collecting values of $\tau_d$ for various rotation angles q and rotation speeds $\dot{q}$, a set of data triplets $(\tau_d, q, \dot{q})$ is obtained (S12).

In Fig.3 the cross-hatched area A denotes this set of data triplets $(\tau_d, q, \dot{q})$. The area A is formed of two parallel, slightly S-curved bands $B^+$, $B^-$ corresponding to clockwise and counter-clockwise rotation, respectively, and two crossbars which interconnect the ends of the S-bands. When only data triplets corresponding to specific amounts $\dot{q}_1^+$ , $\dot{q}_1^-$ , $\dot{q}_2^+$ , ... of $\dot{q}$ are selected, these form S-shaped curves $S_1^+$, $S_1^-$, $S_2^+$, ... inside the S-bands $B^+$, $B^-$ of area A. Since $\tau_{fric}$ was assumed to be independent of q in eq. (2), any q dependency of curves S must be due to $\tau_{cable}$. Since the spacing between curves $S_1^+$, $S_2^+$ associated to clockwise rotation is the same as between $S_1^-$, $S_2^-$ associated to counter-clockwise at the same speeds , $\pm \dot{q}_2^+$ , friction can be assumed to be symmetric, i.e. $c_c^+ = c_c^-$ and $c_v^+ = c_v^-$ in eq. (2). Hence,

$$\tau_d(q,\dot{q}) = \tau_{fric}(\dot{q}) + \tau_{cable}(q) \, , \qquad \tau_d(q,-\dot{q}) = -\tau_{fric}(\dot{q}) + \tau_{cable}(q)$$
$$\Rightarrow \tau_d(q,\dot{q}) + \tau_d(q,-\dot{q}) = 2\tau_{cable}(q)$$
$$\Rightarrow \tau_{cable}(q) = \frac{\tau_d(q,\dot{q}) + \tau_d(q,-\dot{q})}{2} \, , \qquad\qquad (4)$$

which yields curve C in Fig. 3. In step S13, controller 2 stores the curve C as $\tau_{cable}(q)$ in lookup table 16.

Typically, and as shown in Fig. 3, the function $\tau_{cable}(q)$ has a wide central region in which the torque generated by the cable is close to zero, i.e. the cable is at equilibrium. At large rotation angles q, the cable generates a torque which tends to urge the joint back towards the equilibrium region but is usually not strong enough to overcome the friction of the joint.

Further, based on the spacing between the curves $S_1^+$, $S_1^-$, $S_2^+$, ..., $\dot{q}$-related coefficients $c_v^+$, $c_v^-$ of eq. (2) are obtained (S14).

In autonomous mode, when the robot arm 1 reproduces the movement taught to it in lead-through mode, the controller 2 calculates coordinates $r_9$, $r_{13}$ of the displaceable joints 9, 13 and $r_6$, $r_{12}$, $r_{14}$ of the centres of gravity of the links 6, 12 and the end effector 14 and the load torque $\tau_{load}$ induced in the joints 5, 9, 13 just as in steps S1, S2 of Fig. 2 (S15, S16). Electric power consumption and rotation speed of each motor are detected, and the quotient of the two is calculated, yielding a theoretical drive torque $\tau_{mot}$ of the motor in step S17. In S18, an effective drive torque $\tau_{eff}$ is calculated from the time derivative of the rotation speed or, if $\dot{q}$ happens to be zero, is approximated by $\tau_{load}$. The difference between the two torques yields a current value of $\tau_d$ from which, $\tau_{cable}$ being known from eq. (4), $\tau_{fric}$ is calculated in S19. Based on the data for $\tau_{fric}$ thus obtained for various combinations of lever arm **r** and rotation speed $\dot{q}$, load-related coefficients $c_{L,a}^1$, $c_{L,b}^1$, $c_{L,a}^2$, $c_{L,b}^2$, ... of eq. (2) are fitted in S20.

Based on these data, $\tau_{fric}$ **and** $\tau_{cable}$ are determined whenever a given condition is fulfilled (S16), e.g. at predetermined time intervals or when the controller is switched into lead-through mode.

Steps S11-S14 are repeated when time can be spared for the purpose. The data collection steps S15-S19 can be carried out all the time while the robot is operating normally, executing a program it has previously been led through. Coefficient recalculation S20 should be carried out before the controller is switched into lead-through mode, so that the lead-through process can be assisted using up-to-date coefficient values.

Although only the most recent curve $\tau_{cable}(q)$ and coefficients $c_c^+$, $c_c^-$, $c_v^+$, $c_v^-$, $c_{L,a}^1$, $c_{L,b}^1$, $c_{L,a}^2$, $c_{L,b}^2$, ... are used for friction compensation in lead-through mode, at least one set of these data is held in store in addition to the most recent one. This set can be the first set obtained after initial assembly or maintenance of the robot arm 1, or the second most recent set. By comparing the present set with one of these in S21, aging of the robot arm components is monitored, and if differences between the two sets exceed a predetermined threshold, the controller 2 outputs an appropriate warning message in S22. Such a warning can refer to a need to look after bearings of a specific joint in case its coefficients $c_c^+$, $c_c^-$ increase notably or become asymmetric, a need to lubricate if $c_v^+$, $c_v^-$ increase, or to expect cable failure if $\tau_{cable}(q)$ decreases.

1 robot arm
2 controller
3 support
4 member
5 joint
6 link
7 axis
8 axis
9 2nd order joint
10 2nd order member
11 pivot axis
12 link
13 joint
14 end effector
15 hand
16 lookup table

**Claims**

1. A method of controlling a robot arm (1), the robot arm comprising at least one member (4, 10), a joint (5, 9) by which the member is connected to a support (3, 6) and which defines an axis (7, 8, 11), by which the member (4, 10) is rotatable with respect to the support (3, 6), and a motor for driving rotation of the member (4, 10) by said axis(7, 8, 11), the method comprising the steps of

a) establishing (S4) a functional relationship between a load torque ($\tau_{load}$) to which the joint (5, 9) is subject due to weight and posture of the member (4, 10) and an internal torque ($\tau_d$)resisting rotation of the joint (5, 9),
b) determining (S2) a current load torque ($\tau_{load}$) associated to a current posture of the member (4, 10),
c) determining, based on said functional relationship, a current internal torque; and
d) controlling (S6) the motor to apply to the member (4, 10) a torque which compensates the sum of said load and internal torques ($\tau_{load}$, $\tau_d$).

2.  The method of claim 1, wherein the functional relationship comprises at least a friction contribution ($\tau_{fric}$).

3.  The method of claim 2, wherein the friction contribution ($\tau_{fric}$) is estimated (S4) dependent on angular velocity of the joint.

4.  The method of claim 3, wherein the friction contribution ($\tau_{fric}$) is estimated (S4) assuming it to have a maximum at zero angular velocity.

5.  The method of claim 3 or 4, wherein the friction contribution ($\tau_{fric}$) is estimated (S4) assuming it to have minimum at nonzero angular velocity and to increase with angular velocity in an angular velocity range beyond said minimum.

6.  The method of any of the preceding claims, wherein the functional relationship comprises at least an elasticity contribution ($\tau_{cable}$).

7.  The method of claim 6, wherein the joint (5, 9) has an equilibrium angle at which the elasticity contribution ($\tau_{cable}$) is zero, and that if the joint (5, 9) is displaced from said equilibrium angle the elasticity contribution ($\tau_{cable}$) urges the joint (5, 9) towards said equilibrium angle.

8.  The method of any of the preceding claims, wherein the internal torque is determined taking into account a temperature of the joint.

9.  The method of any of the preceding claims, wherein the current posture of the member is detected (S1) and the current load torque is calculated (S2) based on said current posture.

10. The method of any of the preceding claims, wherein the current load torque is determined (S1) taking into account a variable configuration of components (6, 9, 10; 12, 13, 14) of the member (4; 10).

11. The method of any of the preceding claims, wherein in step a) the functional relationship is established by recording (S11, S17) a plurality of data triplets indicating a rotation angle ($q$), a rotation speed ($\dot{q}$) and a motor torque ($\tau_d$) needed to rotate the joint at said angle and rotation speed.

12. The method of claim 11, wherein a first and a second functional relationship are established by carrying out step a) at different times, and a fault diagnosis (S21, S22) is based on a comparison of said first and second functional relationships.

13. A robot system comprising a robot arm (1) and a controller (2), the robot arm (1) comprising at least one member (4), a joint (5) by which the member (4) is connected to a support (3) and which defines an axis (7, 8) by which the member (4) is rotatable with respect to the support (3), and a motor for driving rotation of the member (4) by said axis (7, 8), wherein the controller (2) is adapted to control the motor using the method of any of claims 1 to 12.

14. The robot system of claim 13, wherein the member further comprises a second-order base (6), a second-order member (10), a second-order joint (9) and a second-order motor, the second-order base (6) extends between said joint (5) and said second-order joint (9), and the controller (2) is adapted to control the second-order motor using the method of any of claims 1 to 12.

15. A computer program product comprising program code means which enable a computer to perform the method according to any of claims 1 to 12.

# Fig. 1

# Fig. 2

$$S1 \quad \#\mathbf{r}_i$$

$$S2$$

$$\tau_{load} = \sum_i m_i \mathbf{g} \times (\mathbf{r}_i - \mathbf{r}_j)$$

$$S4$$

$$\tau_{fric} = c_c + c_v \dot{q} + (c_{L,a} \; \Box \; c_{L,b} \dot{q}) \tau_{load}$$

$$S5 \quad \#\tau_{cable}$$

$$S6$$

# Fig. 3

# Fig. 4

Europäisches
Patentamt

European
Patent Office

Office européen
des brevets

# EUROPEAN SEARCH REPORT

Application Number

EP 17 18 3177

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2013/073084 A1 (OOGA JUNICHIRO [JP] ET AL) 21 March 2013 (2013-03-21) * abstract * * figures 2-4 * * paragraphs [0021] - [0032] * | 1-15 | INV. G05B19/423 |
| X | STOLT ANDREAS ET AL: "Sensorless friction-compensated passive lead-through programming for industrial robots", 2015 IEEE/RSJ INTERNATIONAL CONFERENCE ON INTELLIGENT ROBOTS AND SYSTEMS (IROS), IEEE, 28 September 2015 (2015-09-28), pages 3530-3537, XP032832091, DOI: 10.1109/IROS.2015.7353870 [retrieved on 2015-12-11] * abstract * * figures 1,2 * * section II * | 1-15 | |
| A | ANDRE CARVALHO BITTENCOURT ET AL: "An extended friction model to capture load and temperature effects in robot joints", INTELLIGENT ROBOTS AND SYSTEMS (IROS), 2010 IEEE/RSJ INTERNATIONAL CONFERENCE ON, IEEE, PISCATAWAY, NJ, USA, 18 October 2010 (2010-10-18), pages 6161-6167, XP031920356, DOI: 10.1109/IROS.2010.5650358 ISBN: 978-1-4244-6674-0 * abstract * * figures 1,4,6,7 * * page 6162, column 1 * * sections III and IV * | 1-15 | TECHNICAL FIELDS SEARCHED (IPC) G05B B25J |

-/--

The present search report has been drawn up for all claims

| Place of search | Date of completion of the search | Examiner |
|---|---|---|
| The Hague | 8 February 2018 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

Europäisches
Patentamt

European
Patent Office

Office européen
des brevets

# EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| A | US 2013/073085 A1 (OAKI JUNJI [JP] ET AL) 21 March 2013 (2013-03-21) <br> * abstract * <br> * figure 9 * <br> * paragraphs [0120] - [0143] * <br> ----- | 1-15 | |

**TECHNICAL FIELDS SEARCHED (IPC)**

The present search report has been drawn up for all claims

| Place of search | Date of completion of the search | Examiner |
|---|---|---|
| The Hague | 8 February 2018 | Hageman, Elodie |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

 

& : member of the same patent family, corresponding document

EPO FORM 1503 03.82 (P04C01)

page 2 of 2

## ANNEX TO THE EUROPEAN SEARCH REPORT
## ON EUROPEAN PATENT APPLICATION NO.

EP 17 18 3177

This annex lists the patent family members relating to the patent documents cited in the above-mentioned European search report.
The members are as contained in the European Patent Office EDP file on
The European Patent Office is in no way liable for these particulars which are merely given for the purpose of information.

08-02-2018

| Patent document cited in search report | | Publication date | Patent family member(s) | | Publication date |
|---|---|---|---|---|---|
| US 2013073084 | A1 | 21-03-2013 | EP | 2586577 A1 | 01-05-2013 |
| | | | JP | 5383911 B2 | 08-01-2014 |
| | | | JP | WO2011161765 A1 | 19-08-2013 |
| | | | US | 2013073084 A1 | 21-03-2013 |
| | | | WO | 2011161765 A1 | 29-12-2011 |
| US 2013073085 | A1 | 21-03-2013 | JP | 5902425 B2 | 13-04-2016 |
| | | | JP | 2013066965 A | 18-04-2013 |
| | | | US | 2013073085 A1 | 21-03-2013 |

EPO FORM P0459

For more details about this annex : see Official Journal of the European Patent Office, No. 12/82

**EP 3 435 183 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2010088959 A1